# EUROPEAN PATENT APPLICATION

(11) **EP 1 768 278 A1**
(43) Date of publication of application: **28.03.2007**
(21) Application number: 04770807.8
(22) Date of filing: 12.07.2004
(51) Int. Cl.: H04B 7/26, H04Q 7/38

(54) **RADIO BEARER CONTROL METHOD AND RADIO BASE STATION**

(71) Applicant: Fujitsu Ltd., Kawasaki-shi, Kanagawa 211-8588 (JP)
(72) Inventor: KOBAYASHI, Yutaka FUJITSU LIMTED, Kawasaki-shi, Kanagawa 211-8588 (JP); UCHISHIMA, Makoto FUJITSU LIMITED, Kawasaki-shi, Kanagawa 211-8588 (JP)
(74) Representative: Hitching, Peter Matthew
(86) International application number: PCT/JP2004/009914
(87) International publication number: WO 2006/006227

(57) **Abstract**

An object of the present application is to provide a radio bearer control method and a radio base station that prevent interruption of a radio link due to the mismatching of radio bearer states between a mobile terminal and a radio base station. A radio bearer control method according to the present invention includes step 602 of a radio base station transmitting a change request signal to a mobile terminal so that a communications condition set in the mobile terminal is changed, step 604 of the radio base station changing a communications condition set in the radio base station, step 608 of the radio base station measuring the signal quality of a signal received from the mobile terminal, and step 610 of the radio base station returning the changed communications condition to the communication condition before the change if the signal quality continues to be more degraded than a predetermined value for more than a predetermined period.

## Description

### TECHNICAL FIELD

The present invention relates generally to the technical field of mobile communications, and particularly to a radio bearer control method and a radio base station.

### BACKGROUND ART

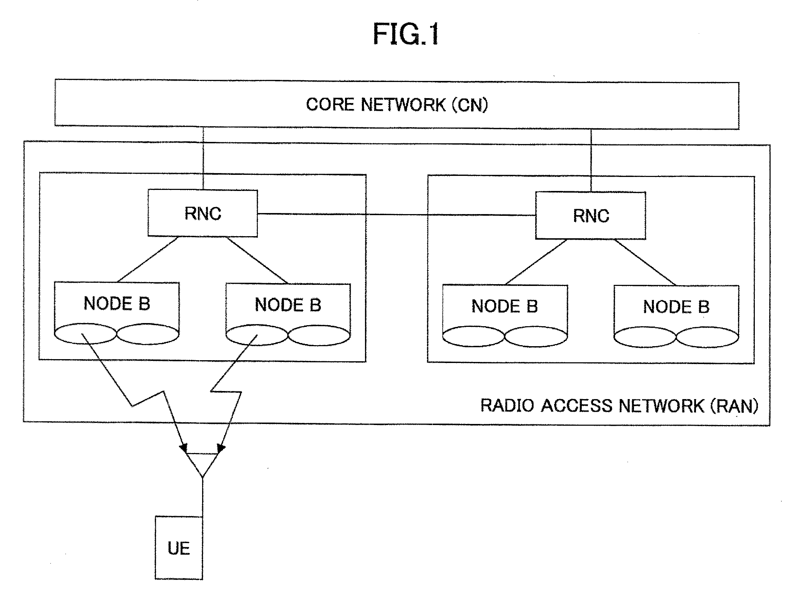

FIG. 1 is a schematic diagram of a radio communications system. Typical examples of the radio communications system include a W-CDMA (Wideband-CDMA) system. The radio communications system includes a core network (CN), multiple radio network controllers (RNCs), multiple radio base stations (NODEs B) and user equipment (UE). Each radio base station forms a cell that is part of a service area. For simplicity, a small number of radio base stations (NODEs B) and radio network controllers (RNCs) are graphically illustrated, but their numbers can be determined as desired. The radio network controllers (RNCs) and the radio base stations (NODEs B) form a radio access network (RAN).

The core network (CN) performs mobility management, call control, a switching function, and other service control. The radio network controller (RNC) controls multiple radio base stations, manages radio resources, and controls radio access. The radio base station (NODE B) communicates with a mobile terminal in the cell through a radio link, and communicates with the radio network controller (RNC) through a wired network.

In the communications with a mobile terminal, information of a variety of contents, such as voice and data packets, is transmitted and received under various communications conditions including the transmission rate. Control of such communications conditions is also referred to as radio bearer control, and the communications conditions are suitably changed in accordance with a communications environment. For example, the mobile terminal performs communications with an individual physical channel being assigned thereto (CELL DCH) or in a wait state (for example, CELL_PCH). Further, radio bearer control is performed even in the CELL_DCH state depending on the amount of traffic communicated so that the states of the mobile terminal and the radio base station are suitably changed. For example, when a large amount of user data is transmitted, dedicated channels (DCHs) are used in the uplink and downlink. On the other hand, if the user data are relatively small in amount, FACH is used in the downlink while multiple mobile terminals compete for use of RACH in the uplink. By properly changing communications conditions such as the transmission rate in addition to thus suitably changing channels, it is possible to use resources with efficiency. Generally, the radio network controller (RNC) determines how the communications conditions of the mobile terminal and the radio base station are set.

This type of radio communications system is disclosed in, for example, Tachikawa, K.; W-CDMA Mobile communications System, pp. 91-187, Maruzen, March 15, 2002.

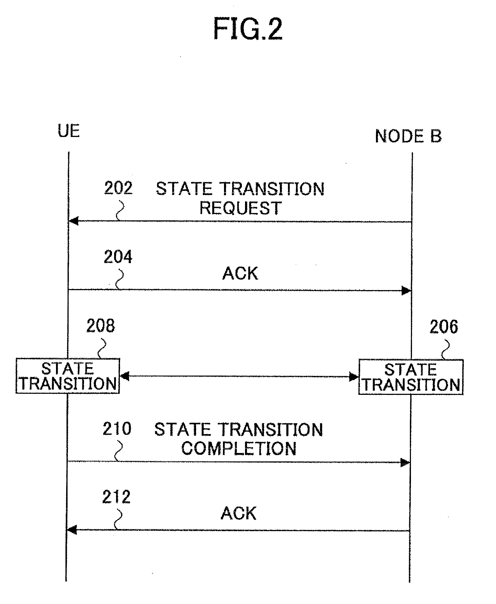

FIG. 2 is a flowchart showing an example of the radio bearer control between a mobile terminal and a radio base station. First, in step 202, the radio base station transmits a state transition request signal to the mobile terminal. The state transition request signal indicates that a communications condition currently set in the mobile terminal should be changed to another specified communications condition. Specifically, for example, it is indicated that set parameters should be changed so that communications are performed at a transmission rate of 32 Kbps after a predetermined change period (for example, 100 ms) while an audio signal is transmitted at 384 kbps at present.

In step 204, the mobile terminal that has successfully received the state transition request signal transmits an acknowledge back (ACK) signal to the radio terminal.

In step 206, the radio base station changes the communications condition as previously announced. Thereby, for example, the subsequent communications are performed at a transmission rate of 32 kbps.

Likewise, in step S208, the mobile terminal changes the communications condition as instructed. Thereby, for example, the subsequent communications are performed at a transmission rate of 32 kbps.

In step 210, a state transition completion signal indicating that state transition has been properly performed is transmitted from the mobile terminal to the radio base station.

In step 212, if the completion signal is successfully received by the radio base station, an acknowledge back signal (ACK) is transmitted to the mobile terminal. Thus, the communications conditions of the mobile terminal and the radio base station are properly changed.

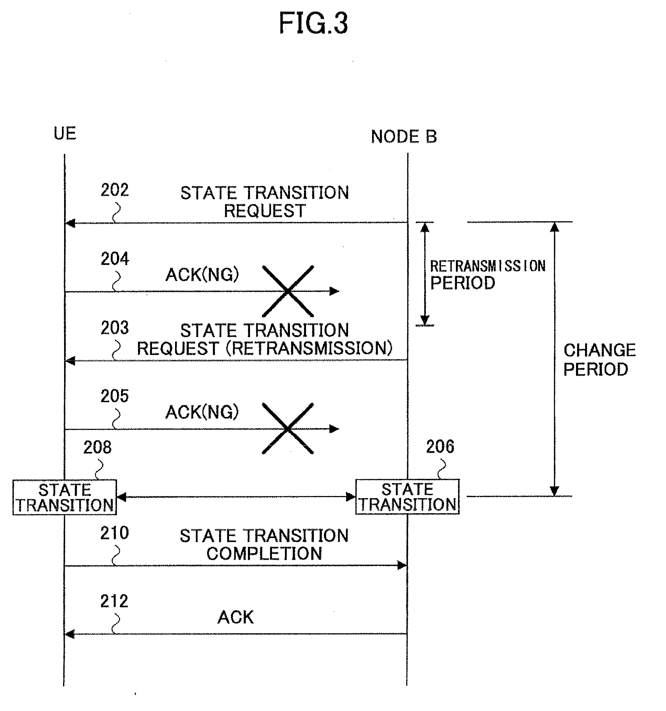

FIG. 3 is another flowchart in the case of changing the communications conditions of the mobile terminal and the radio base station. In step 202, the radio base station transmits a state transition request signal to the mobile terminal the same as in the above-described case.

In step 204, the mobile terminal that has successfully received the state transition request signal transmits an acknowledge back (ACK) signal to the radio terminal. However, in the illustrated case, the acknowledge back signal is not properly transmitted to the radio base station. Such a situation may occur because of, for example, fading in a radio link or transmission power shortage.

In step 203, the state transition request signal transmitted in step 202 is retransmitted in response to no reception of the acknowledge back signal in the radio base station during a predetermined retransmission period.

In step 205, the mobile terminal that has successfully received the request signal retransmits an acknowledge back (ACK) signal to the radio terminal. However, in the illustrated case, the acknowledge back signal is not properly transmitted to the radio base station. As a result, the radio base station does not receive the acknowledge back (ACK) signal. The number of times the state transition request signal is retransmitted after passage of the retransmission period is suitably determined based on the change period and other system parameters.

In step 206, the radio base station changes the communications condition as previously announced. Thereby, for example, the subsequent communications are performed at a transmission rate of 32 kbps.

Likewise, in step 208, the mobile terminal changes the communications condition as instructed. Thereby, for example, the subsequent communications are performed at a transmission rate of 32 kbps.

In step 210, a state transition completion signal indicating that state transition has been properly performed is transmitted from the mobile terminal to the radio base station.

In step 212, if the completion signal is successfully received by the radio base station, an acknowledge back signal (ACK) is transmitted to the mobile terminal.

### DISCLOSURE OF THE INVENTION

### PROBLEMS TO BE SOLVED BY THE INVENTION

Thus, the radio base station performs state transition after passage of a predetermined change period even without receiving an acknowledge back signal from the mobile terminal. Whether the radio base station receives an acknowledgement (ACK) or not, the radio base station performs state transition. It is assumed that the radio base station does not perform state transition if the radio base station does not receive an acknowledgement (ACK). In this case, state transition is successfully performed in the case of the example shown in FIG. 2. However, a problem occurs in the case as shown in FIG. 3, where a state transition request is successfully transmitted but its acknowledgement (ACK) is not successfully transmitted. That is, while the mobile terminal performs state transition, the radio base station does not perform state transition. This causes mismatching of states, so that the communication is interrupted. Forcing state transition after passage of a predetermined period (step 206) enables both the mobile terminal and the radio base station to properly perform state transition so as to make it possible to use resources with efficiency not only in the normal state as shown in FIG. 2 but also in a quasi-normal state as shown in FIG. 3.

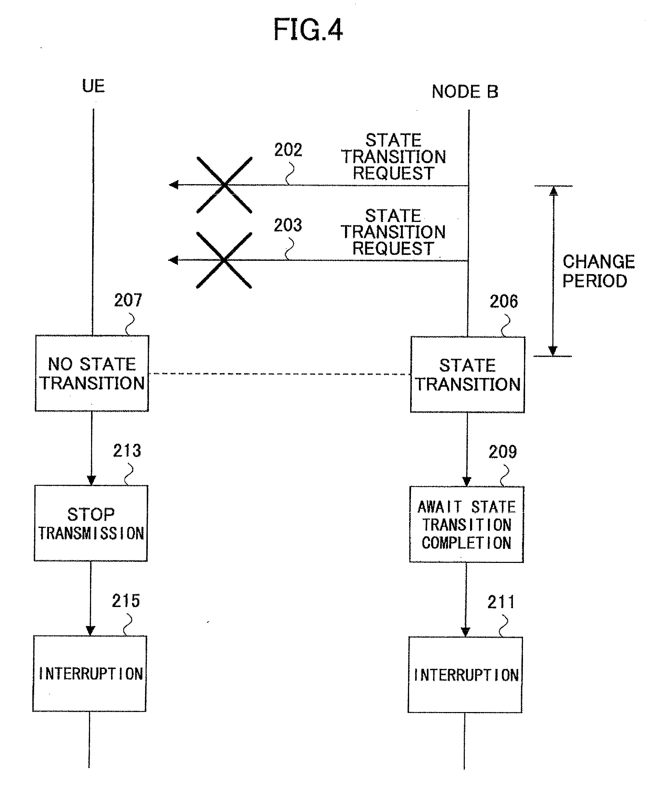

However, even if the operation as described above is performed, a problem may still occur as shown below. In the example shown in FIG. 4, a state transition request is transmitted to the mobile terminal in step 202 and in step 203 after passage of a retransmission period, but neither is successfully received by the mobile terminal. Therefore, state transition is performed in the radio base station in step 206, but state transition is not performed in the mobile terminal as shown in step 207. As a result, for example, the mobile terminal attempts to transmit a signal at 384 kbps as before, but the radio base station attempts to transmit a signal at post-change 32 kbps. Accordingly, neither the mobile terminal nor the radio base station can properly receive a signal, and the mobile terminal stops transmission in step 213, so that the radio link is interrupted in step 215. On the other hand, the radio base station waits for a state transition completion signal in step 209, but neither obtains it nor receives a significant signal, so that the radio link is interrupted in step 211.

The present invention is made in view of the above-described problems, and an object thereof is to provide a radio bearer control method and a radio base station that prevent interruption of a radio link due to the mismatching of radio bearer states between a mobile terminal and a radio base station.

### MEANS FOR SOLVING THE PROBLEMS

(1) In the present invention, a radio bearer control method is employed that is characterized by the steps of a radio base station transmitting a change request signal to a mobile terminal so that a communications condition set in the mobile terminal is changed, the radio base station changing a communications condition set in the radio base station, the radio base station measuring the signal quality of a signal received from the mobile terminal, and the radio base station returning the changed communications condition to the communication condition before the change if the signal quality continues to be more degraded than a predetermined value for more than a predetermined period.
(2) Further, according to the present invention, the radio bearer control method as recited in (1) characterized in that each of the steps is performed when an individual physical channel is assigned to the mobile terminal is employed.
(3) According to the present invention, a radio base station performing radio communications with a mobile terminal is employed. The radio base station includes means for transmitting a change request signal to the mobile terminal so that a communications condition in the mobile terminal is changed, setting means for setting a communications condition of the radio base station, and means for measuring the signal quality of a signal received from the mobile terminal. After the communications condition is changed to another communications condition, the other communications condition is returned to the communications condition before the change using the setting means if the signal quality continues to be more degraded than a predetermined value for more than a predetermined period.
(4) Further, in the present invention, the radio base station as recited in (3) characterized in that the signal quality is evaluated by the power ratio of a desired wave signal and an undesired wave signal is employed.
(5) Further, in the present invention, the radio base station as recited in (3) characterized in that the signal quality is evaluated by the error rate of a pilot signal contained in the received signal is employed.
(6) Further, in the present invention, the radio base station as recited in (3) characterized in that the predetermined period is set according to a period for which the radio base station waits for a signal responsive to the change request signal is employed.
(7) Further, according to the present invention, the radio base station as recited in (3) characterized in that the communications condition includes at least a transmission rate for the communications is employed.

### EFFECTS OF THE INVENTION

According to the present invention, interruption of a radio link due to the mismatching of radio bearer states between a mobile terminal and a radio base station is effectively prevented.

### BRIEF DESCRIPTION OF THE DRAWINGS

FIG. 1 is a schematic diagram of a radio communications system;
FIG. 2 is a flowchart in the case of changing the states of a mobile terminal and a radio base station;
FIG. 3 is another flowchart in the case of changing the states of the mobile terminal and the radio base station;
FIG. 4 is yet another flowchart in the case of changing the states of the mobile terminal and the radio base station;
FIG. 5 shows a functional block diagram of part of a radio base station according to one embodiment of the present invention;
FIG. 6 is a flowchart showing a method according to the embodiment of the present invention;
FIG. 7 is a diagram showing the relationship between the state change of the radio base station and the signal-to-interference power ratio SIR in the normal or quasi-normal state;
FIG. 8 is a diagram showing the relationship between the state change of the radio base station and the signal-to-interference power ratio SIR in the case where a radio link is interrupted because of mismatching of states; and
FIG. 9 is a diagram showing the relationship between the state change of the radio base station and the signal-to-interference power ratio SIR in the case where state transition is performed again according to the embodiment of the present invention.

### DESCRIPTION OF THE REFERENCE NUMERALS

CN core network, RNC radio network controller, Node B radio base station, RAN radio access network, UE mobile terminal,

502 signal processing control part, 504 radio interface part, 506 wire interface part, 508 signal quality measuring part, 510 communications condition setting part

### BEST MODE FOR CARRYING OUT THE INVENTION

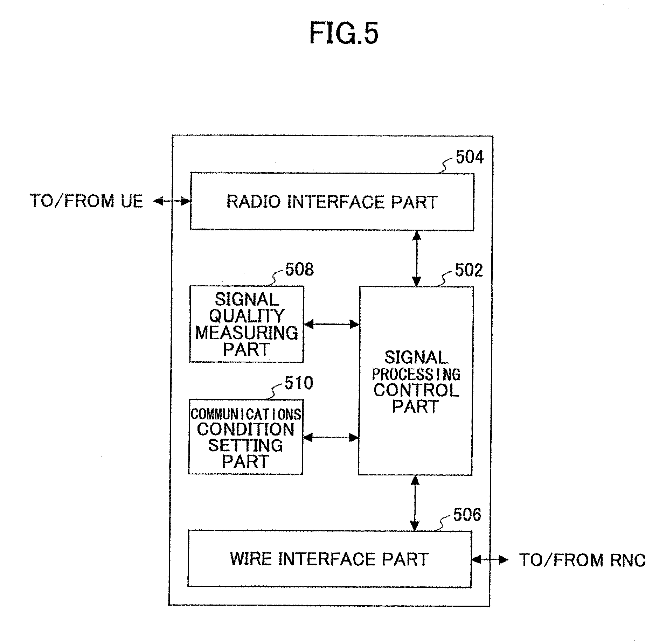

FIG. 5 shows a functional block diagram of part of the functional elements of a radio base station according to one embodiment of the present invention, which part in particular relates to the present invention. The radio base station includes a signal processing control part 502, a radio interface part 504, a wire interface part 506, a signal quality measuring part 508, and a communications condition setting part 510.

The signal processing control part 502 controls various functional elements in the radio base station, and performs signal processing such as baseband signal processing.

The radio interface part 504 is an interface for communicating with a mobile terminal (UE) through a radio link, and also performs modulation and demodulation of a signal to be transmitted and a received signal.

The wire interface part 506 is an interface for performing wired communications with a radio network controller (RNC).

The signal quality measuring part 508 measures the signal quality of a signal received from the mobile terminal. In this embodiment, signal quality is expressed as signal-to-interference power ratio (SIR). In other embodiments, signal quality may be expressed as error rate with respect to a pilot signal contained in the received signal. The pilot signal is a known signal known to both the mobile terminal and the radio base station, and is also referred to as a reference signal or a training signal.

The communications condition setting part 510 sets a transmission rate for communications with the mobile terminal and other communications conditions in accordance with instructions from the signal processing control part 502. The radio network controller (RNC) determines how the communications conditions are set.

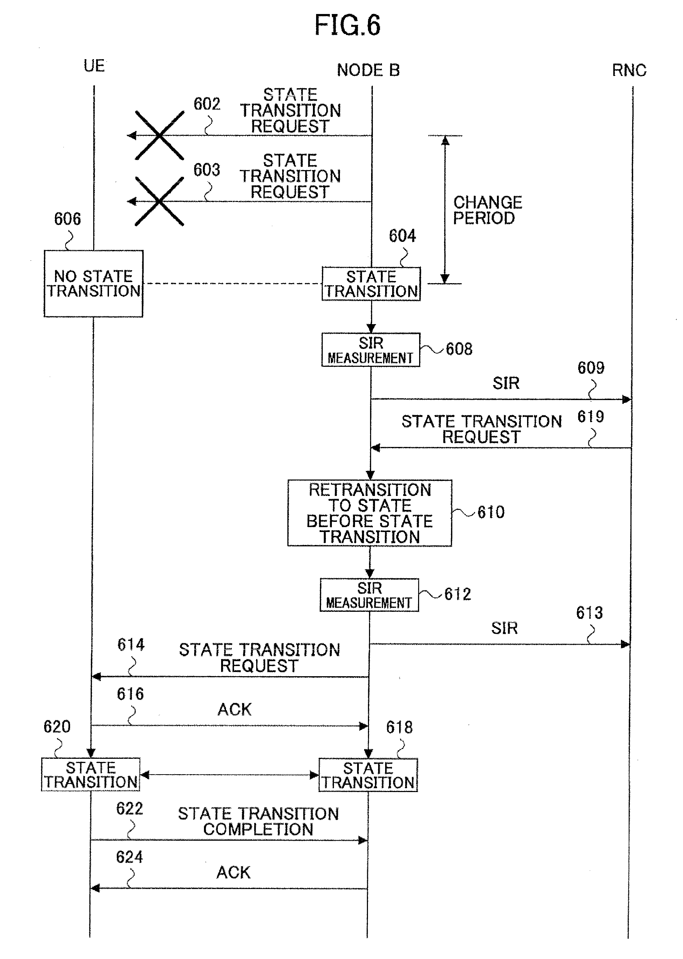

FIG. 6 is a flowchart showing a method according to the embodiment of the present invention.

First, in step S602, the radio base station transmits a state transition request signal to the mobile terminal. The state transition request signal indicates that a communications condition currently set in the mobile terminal should be changed to another specified communications condition. Specifically, for example, it is indicated that set parameters should be changed so that communications are performed at a transmission rate of 32 kbps after a predetermined change period (for example, 100 ms) while an audio signal is transmitted at 384 kbps at present. In the illustrated example, the state transition request signal is not successfully received in the mobile terminal the same as in the example shown in FIG. 4.

In step S603, the radio base station retransmits the state transition request signal in response to no reception of an acknowledgement (ACK) from the mobile terminal within a predetermined period.

In step 604, the radio base station changes the communications condition as previously announced after passage of a change period. Thereby, for example, the subsequent communications are performed at a transmission rate of 32 kbps. However, the mobile terminal does not change the communications condition, and no state transition is performed (step 606).

In step 608, the radio base station measures the signal-to-interference power ratio SIR of a signal received from the mobile terminal. The signal-to-interference power ratio SIR at this point is noticeably degraded because of the difference between the transmission rates of the signals transmitted and received by the mobile terminal and the radio base station. This is because if the transmission rates differ, the contents of the received signals are noise.

As shown in step 609, the radio network controller (RNC) is notified of the value of this signal-to-interference power ratio SIR. In step 619, the radio network controller (RNC) transmits a state transition request signal to the radio base station in response to continuation of the degraded signal-to-interference power ratio SIR for more than a predetermined period. This state transition request signal indicates that the radio base station should return the communications conditions of the radio base station to the communications conditions before the change. The predetermined period may be set to various values, but needs to be set so short as to cause the state transmission request signal to be transmitted before interruption of the radio link. For example, the predetermined period may be set according to a wait period set for awaiting a state transition completion response signal indicating that the mobile terminal has properly completed state transition (steps 210, 622, etc.).

In step 610, the radio base station returns the communication condition changed in step 604 to the communication condition before the change. That is, the radio base station returns the changed transmission rate of 32 kbps to the pre-change 384 kbps. Thereafter, the mobile terminal and the radio base station transmit and receive signals at 384 kbps, so that the signal-to-interference power ratio SIR measured in step 612 is expected to return to the good value before the degradation. In step 613, the radio network controller (RNC) is also notified of this signal-to-interference power ratio SIR. However, since the signal-to-interference power ratio SIR value is good, unlike in the case of step 619, the radio network controller (RNC) does not transmit a state transition request signal to the radio base station.

In step 614, the state request signal is retransmitted. In the illustrated example, it is assumed that this state transition request signal is successfully received by the mobile terminal and an acknowledge back (ACK) signal is transmitted to the radio base station in step 616.

In step 618, the radio base station changes the communications condition after passage of a predetermined period. Thereby, the subsequent communications are performed at a transmission rate of 32 kbps.

Likewise, in step 620, the mobile terminal changes the communications condition as instructed. Thereby, the subsequent communications are performed at a transmission rate of 32 kbps.

In step 622, a state transition completion signal indicating that state transition has been properly performed is transmitted from the mobile terminal to the radio base station.

In step 624, if the radio base station successfully receives the completion signal, an acknowledge back signal (ACK) is transmitted to the mobile terminal. Thus, the communications conditions of the mobile terminal and the radio base station are properly changed.

If the state request signal in step 614 is not properly received by the mobile terminal, it is retransmitted the same as in step 603. Then, if the state request signal is not properly received by the mobile terminal, the same processing as step 604 and the following is performed.

In this embodiment, the radio base station measures the signal-to-interference power ratio SIR, and the radio network controller (RNC) is notified of the measurement result, so that it is determined in the radio network controller (RNC) whether to perform state transition. However, this determination may be performed in the radio base station. That is, the radio base station may monitor whether the degraded signal-to-interference power ratio SIR has continued for more than a predetermined period, and in response to its continuation for more than the predetermined period, notify the radio network controller (RNC) accordingly. However, since the radio network controller (RNC) has the function of performing radio resource management and radio access control, it should be determined in the radio network controller (RNC) how the communications conditions are set. Further, the signal-to-interference power ratio SIR is measured at the points of steps 608 and 612 according to FIG. 6, but may also be measured at other points in addition to these.

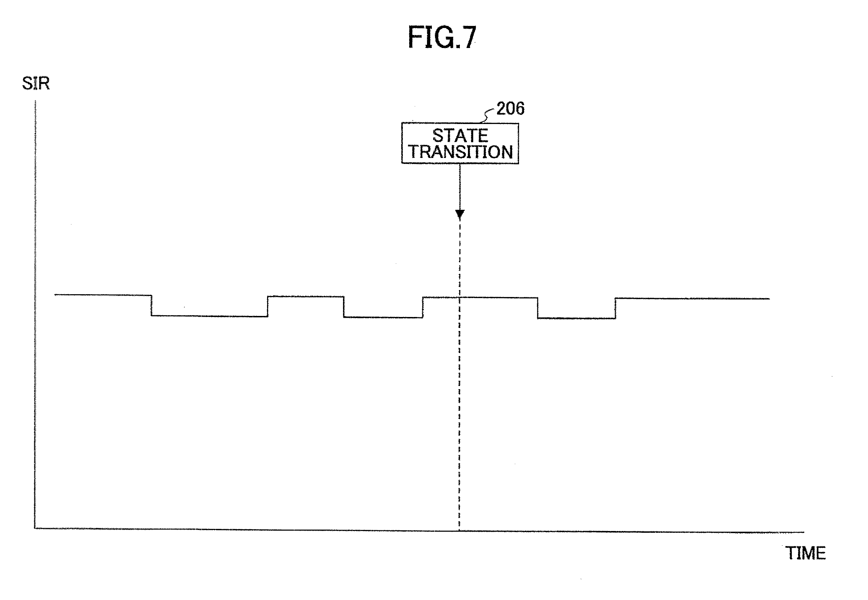

FIGS. 7 through 9 are schematic diagrams showing the relationship between the state change of the radio base station and the signal-to-interference power ratio SIR. FIG. 7 shows the relationship between the state change of the radio base station and the signal-to-interference power ratio SIR in the normal or quasi-normal state as shown in FIG. 2 or 3. Slight fluctuation of the value of the signal-to-interference power ratio SIR shows that signal quality slightly varies because of a communications environment, power control, etc., even in the case where communications are normally performed. In the normal or quasi-normal state as shown in FIG. 2 or 3, the mobile terminal also performs state transition in accordance with the state transition of the radio base station. Therefore, the signal-to-interference power ratio SIR maintains good values before and after the state transition.

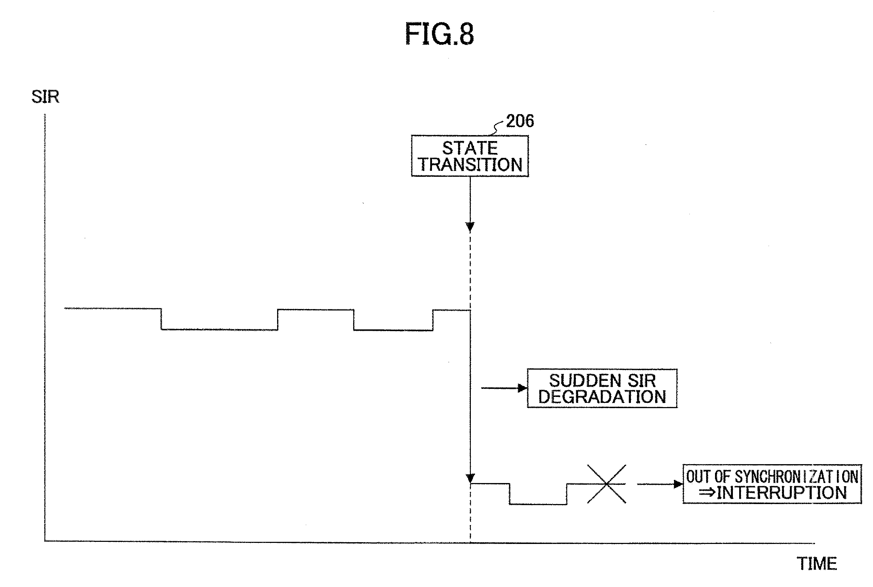

FIG. 8 shows the case where the radio link is interrupted because of mismatching of the states of the mobile terminal and the radio base station as shown in FIG. 4. It is shown that the signal-to-interference power ratio SIR is suddenly degraded after the state transition because of the difference between transmission rates.

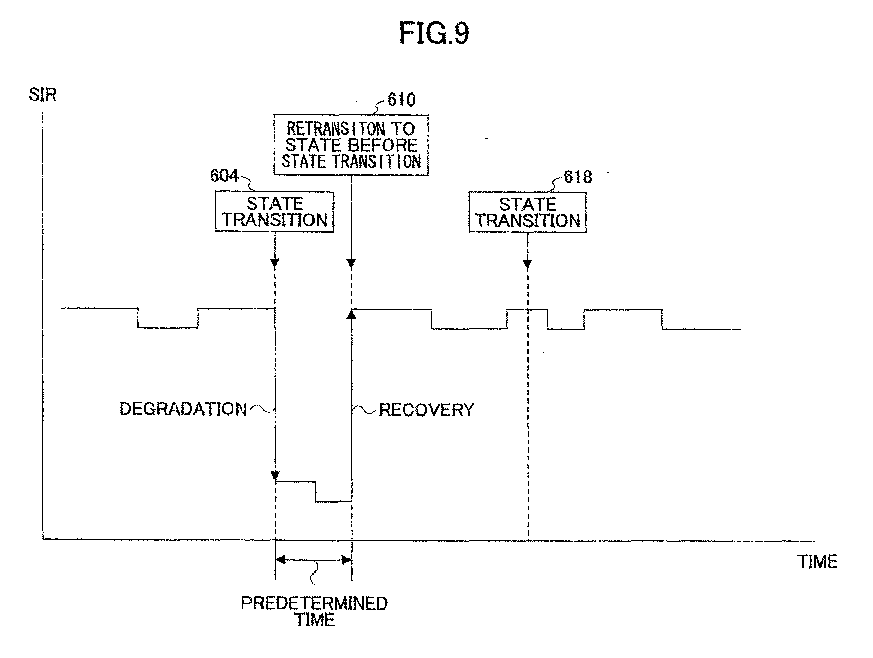

FIG. 9 shows the case where state transition is performed again so that the radio link is maintained as shown in FIG. 6. The signal-to-interference power ratio SIR is noticeably degraded because of the state transition of step 604. It is so far the same as the case of FIG. 8. However, the communications conditions of the mobile terminal and the radio base station match each other because of the re-state transition of step 610, so that the signal-to-interference power ratio SIR returns to the good value before the state transition. State transition is successfully performed in the radio base station and the mobile terminal in steps 618 and 620. Therefore, the signal-to-interference power ratio SIR can maintain good values before and after the state transition. In FIGS. 7 through 9, signal quality is evaluated by the signal-to-interference power ratio SIR, but the same tendency will be observed before and after state transition with respect to other bases for evaluating signal quality. For example, the error rate of a synchronization pattern in a received pilot signal may be employed as another basis for evaluating signal quality.

Thus, by monitoring the quality of a signal received from the mobile terminal, it is possible to determine properness of state transition in the radio base station in a simplified manner. If it is improper, the radio base station promptly returns to the state before state transition. Therefore, it is possible to avoid interruption of the radio link.

The present invention is described above with respect to a specific embodiment, but it is obvious to a person skilled in the art that modifications and variations may be made within the scope of the present invention.

## Claims

1. A radio bearer control method, **characterized by** the steps of:
a radio base station transmitting a change request signal to a mobile terminal so that a communications condition set in the mobile terminal is changed, and the radio base station changing a communications condition set in the radio base station;
the radio base station measuring a signal quality of a signal received from the mobile terminal; and
the radio base station returning the changed communications condition to the communication condition before the change if the signal quality continues to be more degraded than a predetermined value for more than a predetermined period.

2. The radio bearer control method as claimed in claim 1, **characterized in that** each of the steps is performed when an individual physical channel is assigned to the mobile terminal.

3. A radio base station performing radio communications with a mobile terminal, **characterized by**:
means for transmitting a change request signal to the mobile terminal so that a communications condition in the mobile terminal is changed;
setting means for setting a communications condition of the radio base station; and
means for measuring a signal quality of a signal received from the mobile terminal,
wherein after the communications condition is changed to another communications condition, the other communications condition is returned to the communications condition before the change using the setting means if the signal quality continues to be more degraded than a predetermined value for more than a predetermined period.

4. The radio base station as claimed in claim 3, **characterized in that** the signal quality is evaluated by a power ratio of a desired wave signal and an undesired wave signal.

5. The radio base station as claimed in claim 3, **characterized in that** the signal quality is evaluated by an error rate of a pilot signal contained in the received signal.

6. The radio base station as claimed in claim 3, **characterized in that** the predetermined period is set according to a period for which the radio base station waits for a signal responsive to the change request signal.

7. The radio base station as claimed in claim 3, **characterized in that** the communications condition includes at least a transmission rate for the communications.
